Europäisches Patentamt

**European Patent Office**

Office européen des brevets

(11) Publication number: **0 058 508**
A1

## (12) EUROPEAN PATENT APPLICATION

(21) Application number: **82300633.3**

(22) Date of filing: **09.02.82**

(51) Int. Cl.³: **B 62 D 25/18**

(30) Priority: **12.02.81 GB 8104440**

(43) Date of publication of application:
**25.08.82 Bulletin 82/34**

(84) Designated Contracting States:
**BE CH DE FR IT LI LU NL SE**

(71) Applicant: **CANNON RUBBER LIMITED**
**Cannon Works Ashley Road**
**Tottenham London N17 9LH(GB)**

(72) Inventor: **Williams, Roger Leonard**
**122 Beechfield**
**Hoddesdon Hertfordshire(GB)**

(74) Representative: **Jenkins, Richard Gray et al,**
**R.G.C. Jenkins & Co. Chancery House 53-64 Chancery**
**Lane**
**London, WC2A 1QU(GB)**

(54) Vehicle mud flap assembly.

(57) A vehicle mud flap has a resilient flap (10) and a clamping device (30) for clamping the flap to a support on a vehicle body. The clamping device comprises a clamping plate (30) having two clamping portions (39) of different size and/or shape. Means (26, 32, 34, 36) are provided for fastening the clamping plate to the flap with a selected one of the clamping portions in a clamping position. In use, the assembly may be mounted on the support with the selected clamping portion of the plate bearing against the support and with the support being clamped between the flap and the selected clamping portion.

FIG.1.

EP 0 058 508 A1

Croydon Printing Company Ltd

# VEHICLE MUD FLAP ASSEMBLY

The present invention relates to a vehicle mud flap assembly which enables a vehicle mud flap to be attached to any one of a variety of vehicles quickly and easily with the flap firmly located in relation to the body of the vehicle.

Conventionally, vehicle mud flaps have been attached to the body of a vehicle using some form of clamping means. For example, a support on the body may simply be inserted and held between a clamping surface of the clamping means and the flap.

A problem with this arrangement is that different mud flap assemblies may be required for different makes of vehicle, and even different brands of vehicle of the same make, since variations in the design of vehicle result in variations in the shape of the support and its disposition relative to other parts of the vehicle whereas the clamping surface of the clamping means is not necessarily of a suitable size, shape or arrangement to accommodate such variations and yet still obtain a firm grip on each different support.

Therefore, it is an object of the present invention to provide a vehicle mud flap assembly which is readily adaptable for use with a variety of different types of vehicle. It is a further object of the invention to provide such an assembly which enables the flap to be quickly and easily mounted firmly on a vehicle body.

According to the present invention there is provided a vehicle mud flap assembly having a resilient flap and a clamping device for clamping the flap to a support on a vehicle body, the clamping device comprising a clamping plate having two clamping portions of different size and/or shape, and means for fastening the clamping plate to the flap with a selected one of the clamping portions in a clamping position, whereby in use, the assembly may be mounted on the support with the selected clamping portion of the clamping plate bearing against the support and with the support being clamped between the flap and the selected clamping portion.

By providing the clamping plate with two different clamping portions, either one of which can be placed in a clamping position for attaching the assembly relative to a vehicle body, the assembly can be used with at least two different types of vehicle. At the same time, it can be mounted on a particular vehicle in a simple manner by first establishing by visual comparison of the plate and the shape of the body which clamping portion of the plate is better suited to be used for clamping purposes on that vehicle and then by fastening the clamping plate and the flap together on the vehicle with the selected clamping portion in the clamping position.

In a preferred form of the invention, the fastening means comprise two bolts engageable within openings in the resilient flap and in the clamping plate, and nuts for securing the bolts in the openings, the openings in the flap and/or in the clamping plate being arranged such that the clamping plate may be fastened to the flap with the selected clamping portion in a selected one of a plurality of clamping positions. This allows the assembly to be used within an even wider range of vehicles.

The invention is described further, by way of example, with reference to the accompanying drawings in which:-

Figure 1 is an exploded view of a first embodiment of vehicle mud flap assembly according to the present invention;

Figure 2 is a view of the mud flap of this assembly showing the flap face which is not exposed in Figure 1;

Figure 3 is a perspective view of the assembly in the process of being mounted on a vehicle body;

Figure 4 is a perspective view of a modification of the clamping plate and fastening means shown in Figure 1; and

Figure 5 is a section taken on the line V-V in Figure 4.

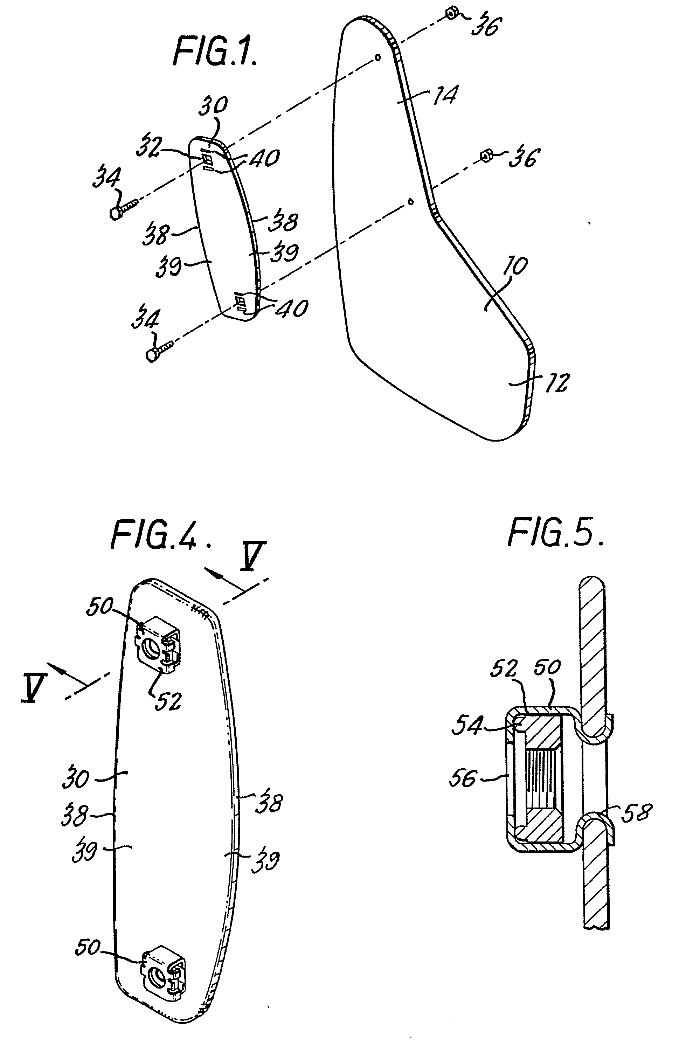

In Figures 1, 2 and 3 a vehicle mud flap is indicated generally at 10. The flap 10 is formed preferably by compression, transfer or injection moulding from any suitable material such as rubber, synthetic rubber or a synthetic plastics material. The flap is substantially flat and comprises a flexible body portion 12 and a stiffened mounting portion 14. One of the surfaces of the mounting portion 14 has a raised surface area 16 in which a metal stiffening strut 18 is embedded.

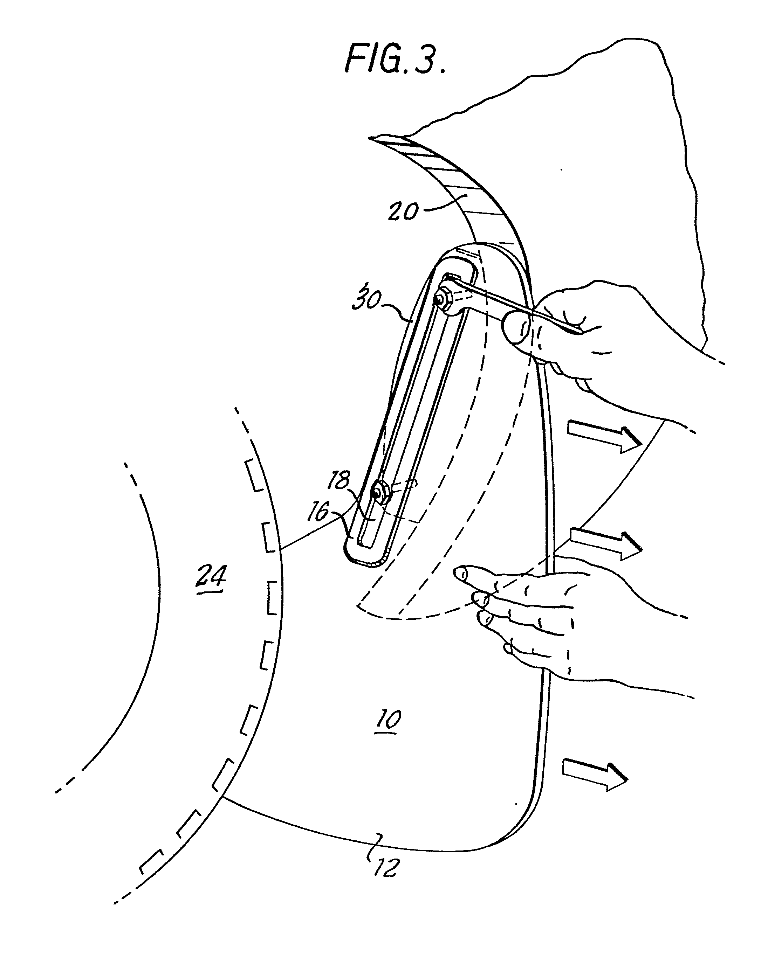

The stiffening strut is arranged so as to lie generally along an edge of a flange 20 of a vehicle body 22 (see Figure 3) to which the flap is to be attached when the body portion 12 is in the desired position relative to the respective wheel 24 of the vehicle. Two rows of openings 26 are provided through the stiffening strut 18 for receiving fastening means for fastening the flap on the vehicle flange 20. Prior to mounting the flap on the flange, the openings 26 do not extent right through the flap but are closed at the surface which is remote from the raised surface area 16 by a thin frangible membrane (not shown).

For securing the flap 10 on the flange 20, a clamping device is provided. This device comprises an elongate clamping plate 30 as shown in Figure 1 containing a pair of openings 32, a pair of bolts 34 and a pair of nuts 36. The clamping plate is formed from plastics coated metal so that it has both rigidity and yet a slightly yielding surface which will not damage the surface finish of the vehicle body. The opposed longitudinal edges 38 of the plate 30 are curved and the radius of curvature of each varies along its length. Further, the openings 32, which are generally rectangular, are arranged at opposite ends of the plate and so that, at one such end, the opening is offset from the central region of the plate towards one of the longitudinal edges and, at the other end, the opening is offset from the central region towards the other of the longitudinal edges. Thus, the two openings are asymmetrically arranged relative to each longitudinal edge 38 of the clamping plate 30 not only by virtue of the curvature of each edge varying along its length but also because they are offset in opposite directions from the central region of the plate.

As a result of the asymmetrical profile of the plate and, further, the asymmetrical arrangement of the openings 32, the plate 30 is provided with two edge, or clamping, portions 39 of different shape, each of which is defined between a respective edge 38 and a line through the two openings 32.

In use, the clamping plate 30 is fastened to the flap 10 by the bolts 34 and nuts 36, threaded shanks of the bolts 34 engaging within respective openings 26 in each row in the flap 10 and in the openings 32 in the clamping plate 30. The dimensions of the openings 26 and 32 and the shanks of the bolts 34 are selected such that the bolts fit closely within the openings 26 but loosely within the openings 32. As shown in Figures 1 to 3, when fastening the clamping plate 30 and flap 10 together, the bolts are inserted through the plate 30 with their heads each engaging one surface of the plate and through the flap 10 so that their free ends, on which the nuts 36 are mounted, project from the surface of the flap having the raised surface area 16. In order to inhibit rotation of the bolts in the openings 26,32 as the nuts are tightened, the clamping plate 30 is provided with projections or teeth 40 adjacent the openings 32 for engaging the heads of the bolts 34.

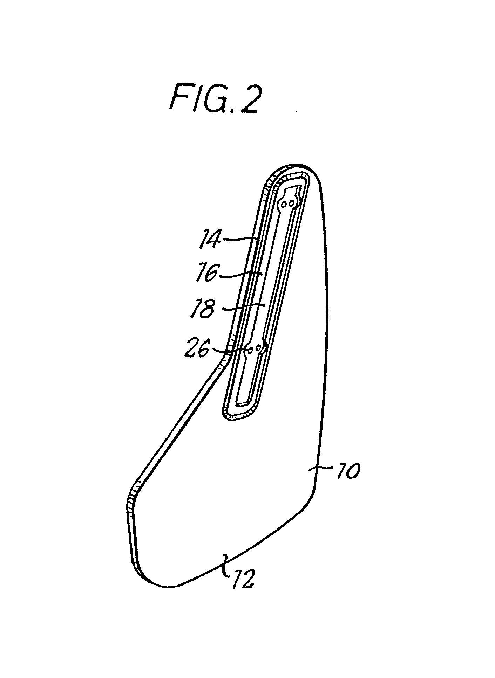

Attachment of the flap 10 to the vehicle flange
20 is illustrated in Figure 2 and takes place as follows:-

Firstly, the clamping plate 30 is arranged so that
one of its portions 39 can be disposed behind the flange
20 with the associated longitudinal edge 38 adjacent to
or abutting against the surface of the body flanking
the foot of the flange and with the openings 32 exposed
adjacent the free edge of the flange. The actual
orientation of the clamping plate relative to the vehicle
wheel which will achieve this varies from vehicle to
vehicle but can be gauged in a simple manner by visual
comparison of the flange contour with the portions 39
and edges 38 of the plate 30. Next, the bolts are inserted
through the openings 32 and through two of the openings
26, one in each row, breaking the membranes closing these
openings. The size of the openings 32 is such that each
bolt 34 can be inserted through any one of the openings
26 in the associated row while the other bolt is in any
one of the openings 26 in the other row and so the flap
10 can be arranged in a desired position relative to the
clamping plate 30 by appropriate selection of the openings
26. The nuts 36 are then threaded onto the free ends of
the bolts 34 projecting from the surface of the flap which
includes the raised surface area 16 in order to join the
plate and flap loosely together.

With the clamping device thus mounted on the flap 10, the flap is applied to the flange 20 by inserting the flange 20 between the plate and flap until the longitudinal edge portion of the plate which is to lie behind the flange achieves a substantial overlap with the flange. At this point, it is desirable that the shanks of the bolts are spaced slightly from the free edge of the flange 20 so that they do not damage the paintwork of the vehicle body. This, and also correct alignment of the flap with the vehicle body can be ensured if a plate of appropriate dimensions is chosen such the respective edge 38 contacts and locates positively against the surface of the vehicle body next to the foot of the flange. The nuts 36 are then tightened so as to clamp the flange 20 securely between the plate 30 and the flap 10. During this tightening, the teeth 40 bear against the heads of the bolts 20 and resist rotation of the bolts, enabling the nuts to be tightened securely without the need for gripping and holding their heads. Since the plastics coating of the plate 30 bears against the flange on one side and the flexible material of the flap 10 bears against the flange 20 on the other side, the surface finish of the flange is well protected against damage by the mud flap assembly, the metal elements of the assembly being prevented from direct contact with the flange.

Turning to Figures 3 and 4 an alternative means for ensuring that secure clamping of the assembly on the flange 20 is possible is illustrated. In this instance, the teeth 40 on the clamping plate 30 are omitted and in their place an arrangement for mounting nuts 36 on the clamping plate such that rotation of the nuts relative to the plate is resisted is provided. This arrangement includes a pair of retaining elements 50. Since these are identical, only one will be described. This element 50 comprises a conventional cage 52 in which a nut 54 is loosely seated. The cage has an opening 56 aligned with but slightly larger than that in the nut, and has a pair of flanges 58 extending axially relative to the nut and provided with grooved free edge portions which engage edge portions of the clamping plate 30 flanking the openings 32 to secure the cage to the plate. Since the nut is loosely retained in the cage and the opening 56 is larger than the opening in the nut, there is sufficient play in these elements to permit the bolts 34 to enter whichever one of the openings 26 in each row in the flap 10 that is desired, as before.

Using the arrangement illustrated in Figures 3 and 4, of course, the screws 34 are inserted through the flap 10 and plate 30 so that their heads engage the flap and their free ends project behind the flange 20. By rotating their heads, the whole assembly is tightened on the flange since the cages 52 resist rotation of the nuts 54. If desired, for further strengthening, the nuts 54 may be conventional lock nuts, being provided with a friction ring fitted within a groove in the end of the nut and provided with radially inwardly projecting fingers which bite into the thread on the bolt so that once it has been tightened relative to the nut accidental unthreading is positively resisted.

The described mud flap assemblies are suitable for many different vehicles because the clamping device can be adapted to suit different shapes and sizes of vehicle flange on which the assembly is to be mounted. The difference in the shape of the two clamping portions of the plate 30 permits the one which will achieve the greatest surface contact with the vehicle flange to be used to provide the clamping action in any particular instance. And since the correct orientation for the clamping plate relative to the mud flap for a given type of vehicle is easily established by visual comparison, the assembly may be quickly and easily fitted in place.

Although it is preferable for the assembly to have a clamping plate whose two clamping portions are of different shape, it should be appreciated that this is not essential. Instead, the two portions may, if desired, be of similar shape but different size.

CLAIMS:

1. A vehicle mud flap assembly having a resilient flap (10) and a clamping device (30) for clamping the flap to a support on the vehicle body, characterised in that the clamping device comprises a clamping plate (30) having two clamping portions (39) of different size and/or shape, and means (26, 32, 34, 36) adapted for fastening the clamping plate to the flap with a selected one of the clamping portions in a clamping position, whereby, in use, the assembly may be mounted on the support with the selected clamping portion of the clamping plate bearing against the support and with the support being clamped between the flap and the selected clamping portion.

2. An assembly as claimed in claim 1, characterised in that the clamping plate inlcudes openings (32) for receiving clamping elements (34), the openings being arranged such that the clamping plate may be fastened to the flap with the selected clamping portion in a selected one of a plurality of clamping positions.

0058508

- 2 -

3. An assembly as claimed in claim 2, characterised in that the openings in the clamping plate are asymmetrically arranged relative to edges(38) of the clamping portions, whereby the clamping plate may be fastened to the flap with the selected clamping portion in the selected one of the plurality of clamping positions in dependence upon which face of the clamping plate is arranged remote from the resilient flap when the clamping plate is fastened to the flap.

4. An assembly as claimed in claim 1, 2 or 3, characterised in that the clamping portions have curved edges and the radius of curvature of each edge varies along the length of the edge.

5. An assembly as claimed in claim 2 or 3, characterised in that the clamping elements comprise two bolts (34) engageable within the openings in the clamping plate and within openings (26) in the resilient flap, in that the flap is provided with two rows of the openings, and in that the openings in the clamping plate are enlarged relative to the size of the bolts such that each bolt is engageable within any opening in one row in the flap when the other bolt is engaged with any opening in the other row in the flap, whereby the clamping plate may be fastened to the flap with the selected clamping portion in the selected one of the plurality of clamping positions.

6. An assembly as claimed in claim 5, characterised in that at least one surface of the clamping plate is formed with means (40) adapted to bear against the head of each bolt and resist relative rotation between the plate and that head when the assembly is being mounted on the vehicles support.

7. An assembly as claimed in claim 6, characterised in that the means adapted to bear against the head of each bolt comprises projections on the clamping plate.

8. An assembly as claimed in any of claims 2, 3 or 5, characterised in that the clamping elements further comprise nuts (36) for securing the bolts in the openings, and retaining means (50) for mounting the nut on the clamping plate in such a manner that relative rotation between the nut and the clamping plate is resisted when the assembly is being mounted on the vehicle support.

- 4 -

9. An assembly as claimed in claim 8, characterised in that the retaining means comprise cages (50) fixed to the clamping plate and arranged loosely to receive the nuts such that the nuts are laterally displaceable within the cages.

10. An assembly as claimed in claim 9, characterised in that the cages are secured within the openings in the clamping plate by way of flanges (58) on the cages.

FIG.1.

FIG.4.

FIG.5.

FIG. 2

FIG.3.

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| A | GB - A - 1 442 226 (ARENHOLD)<br>* entire document *<br>--- | 1 |
| A | DE - B2 - 2 529 718 (WEGU)<br>---- | |

**CLASSIFICATION OF THE APPLICATION (Int. Cl. 3)**

B 62 D 25/18

**TECHNICAL FIELDS SEARCHED (Int.Cl. 3)**

B 62 D 25/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| Berlin | 29-03-1982 | LUDWIG |